(19) Europäisches Patentamt

European Patent Office

Office européen des brevets

(11) Veröffentlichungsnummer: **0 220 524**
**B1**

(12) **EUROPÄISCHE PATENTSCHRIFT**

(45) Veröffentlichungstag der Patentschrift: **27.06.90**

(21) Anmeldenummer: **86113509.3**

(22) Anmeldetag: **01.10.86**

(51) Int. Cl.⁵: **B 23 K 9/20**

(54) **T-Bolzen zur Anwendung beim Bolzenschweissen.**

(30) Priorität: **09.10.85 DE 3536084**

(43) Veröffentlichungstag der Anmeldung:
**06.05.87 Patentblatt 87/19**

(45) Bekanntmachung des Hinweises auf die
Patenterteilung:
**27.06.90 Patentblatt 90/26**

(84) Benannte Vertragsstaaten:
**AT BE CH DE ES FR GB GR IT LI LU NL SE**

(56) Entgegenhaltungen:
**DE-U-7 522 984**
**GB-A-2 065 011**

(73) Patentinhaber: **TRW Nelson Bolzenschweiss-**
**Technik GmbH**
**Flurstrasse 7-19**
**D-5820 Gevelsberg (DE)**

(72) Erfinder: **Biniszkiewicz, Günter**
**Lampfer Weg 8**
**D-5990 Altena 8 (DE)**
Erfinder: **Jost, Klaus Ernst**
**Flensburgerstrasse 18**
**D-5800 Hagen 1 (DE)**

(74) Vertreter: **Eder, Eugen, Dipl.-Ing. et al**
**Patentanwälte Dipl.-Ing. E. Eder Dipl.-Ing. K.**
**Schieschke Elisabethstrasse 34**
**D-8000 München 40 (DE)**

# Beschreibung

Die Erfindung bezieht sich auf einen T-Bolzen 1, mit einem innerhalb eines Bolzenhalters 7 geführten Bolzenkopf 2 und einem Bolzenschaft 3 mit einem Stirnflächenbereich 4 zum Aufschweißen auf einen Träger.

Als Stand der Technik sind bereits eine Anzahl von verschiedenen Konstruktionen von T-Bolzen für die automatische Zuführung, insbesondere beim Einsatz in der Automobilindustrie, bekannt. Diese bekannten Bolzen weisen den Nachteil auf, daß der Wandbereich des Bolzenkopfes nur ungenügend zylindrisch ausgebildet ist, so daß der T-Bolzen insgesamt innerhalb des Bolzenhalters eine ungenügende Führung erfährt und eine schräge Position einnehmen kann. Hierdurch ergibt sich neben dem vorgenannten Nachteil auch eine schlechte Stromübertragung auf den Stirnflächenbereich des T-Bolzens, wodurch insgesamt die Verarbeitung dieser bekannten Bolzen erschwert wird.

Zum Stand der Technik zählt weiterhin ein Schweißbolzen zum Aufschweißen an metallischem Grundmaterial nach dem Lichtbogen-Schweißverfahren, mit kegeliger, einen stumpfen Kegelwinkel aufweisender Schweißfläche und Zündspitze (DE-U-7 522 984). Hierbei weist der äußere Bereich der Schweißfläche einen im Abstand zur Umfangskontur angeordneten, konzentrisch zur Zündspitze verlaufenden Ringwulst auf. Dieser Ringwulst bietet dem Lichtbogen eine gleichmäßig um die Zentrumszone liegende Ansatzfläche und eine Lichtbogenstrecke mit geringem elektrischen Widerstand. Bei dieser bekannten Konstruktion wird also der Bolzenkopf an einem metallischen Grundmaterial angeschweißt, wobei der Ringwulst die vorgenannte Funktion übernehmen soll.

Demgegenüber liegt der vorliegenden Erfindung die Aufgabe zugrunde, einen T-Bolzen nach der eingangs genannten Art so auszubilden, daß auf einfache Weise eine verbesserte Führung des Bolzenkopfes innerhalb des Bolzenhalters gewährleistet ist.

Diese Aufgabe wird erfindungsgemäß dadurch gelöst, daß der Bolzenkopf eine zylindrische Wandung zur Führung innerhalb des Bolzenhalters aufweist, wobei die Oberseite des Bolzenkopfes zumindest über einen Teilbereich mit Rillen versehen ist. Durch diese Rillen ergibt sich bei der Herstellung des T-Bolzens der überraschende Vorteil, daß die zylindrischen Wandflächen des Bolzenkopfes eine höhere Genauigkeit aufweisen, so daß daraus ein gerader, wackelfreier Sitz und eine verbesserte Stromübertragung innerhalb der Führung des Bolzenhalters resultiert; durch die Anbringung von Rillen auf der Kopfoberseite des Bolzenkopfes fließt das Material verbessert in die Ecken, so daß eine Annäherung an den gewünschten Radius erzielt wird.

In weiterer Ausgestaltung der Erfindung können die Rillen entweder konzentrisch oder spiralförmig zur Bolzenlängsachse verlaufen.

Weiterhin besteht erfindungsgemäß die Möglichkeit, daß nur der äußere Bereich der Kopfoberseite mit den Rillen versehen ist, wobei alternativ der äußere Bereich in etwa dem Durchmesser des Bolzenschaftes entsprechen kann.

Nach einem anderen Merkmal der Erfindung kann der an die Rillen anschließende innere Bereich der Kopfoberseite muldenartig ausgebildet sein.

Die Erfindung wird nachfolgend anhand von in der Zeichnung dargestellten Ausführungsbeispielen näher beschrieben. In der Zeichnung zeigen;

Fig. 1 eine schematische Seitenansicht des T-Bolzens in der Führung des Bolzenhalters im Schnitt;

Fig. 2 und 3 jeweils eine Draufsicht auf die Kopfoberseite des Bolzenkopfes in zwei verschiedenen Ausführungsformen.

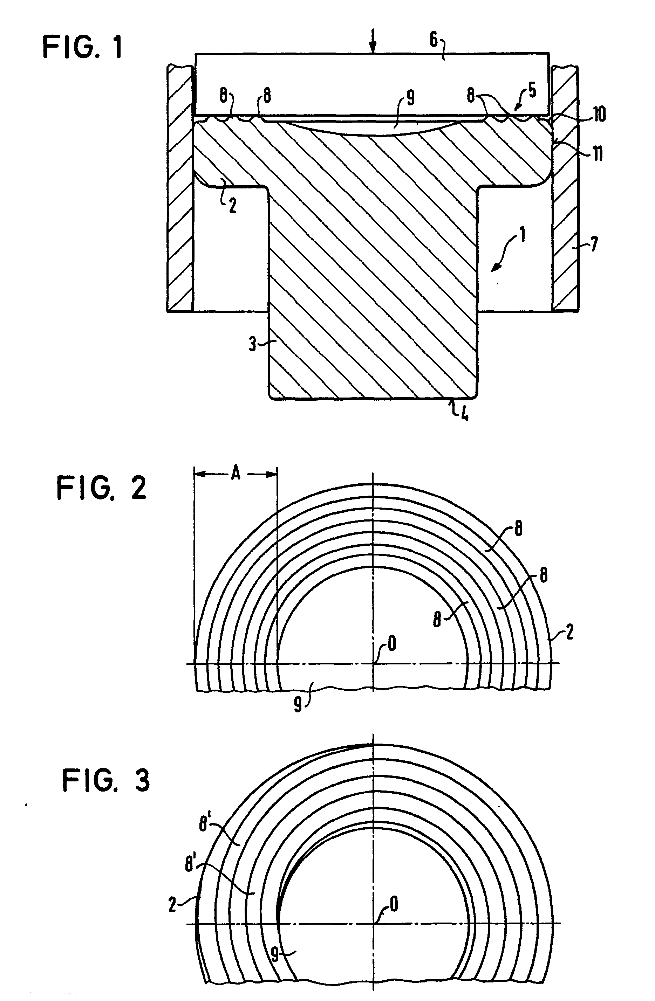

Nach Fig. 1 besteht der T-Bolzen 1 im wesentlichen aus einem Bolzenkopf 2 sowie einem Bolzenschaft 3. Der Bolzenkopf 2 ist innerhalb eines schematisch dargestellten Bolzenhalters 7 geführt und kann von einem schematisch dargestellten Werkzeugteil 6 in Pfeilrichtung beaufschlagt werden. Der Bolzenschaft 3, welcher an den Bolzenkopf 2 anschließt, ist so ausgebildet, daß der Stirnflächenbereich 4 mit einem Träger verschweißbar ist. Dieser T-Bolzen 1 dient damit zur Anwendung beim Bolzenschweißen mit automatischer Zuführung, insbesondere für die Automobilindustrie.

Die vom Werkzeugteil 6 beaufschlagbare Kopfoberseite 5 des Bolzenkopfes 2 ist nach Fig. 1 über einen Teilbereich mit Rillen 8 versehen.

Aus Fig. 2 geht hervor, daß die Rillen 8 konzentrisch zur Bolzenlängsachse 0 verlaufen können. Diese Rillen befinden sich im äußeren Bereich A der Kopfoberseite 5. An diesen äußeren Bereich kann nach Fig. 1 und 2 eine Mulde 9 anschließen.

Alternativ besteht auch die Möglichkeit, daß nach Fig. 3 die Rillen 8' spiralförmig zur Bolzenlängsachse 0 verlaufen.

Die erfindungsgemäße Konstruktion ist auch für sogenannte T-Stifte in der Bolzenschweißtechnik anwendbar.

Die Rillen können beliebige Form aufweisen, z.B. auch waben- oder gitterförmig sein und sich im Bedarfsfall auch über die gesamte Fläche 5 erstrecken.

Die bei der Herstellung des T-Bolzens 1 eingebrachten Rillen 8 bzw. 8' bewirken, daß das aus Metall bestehende Material des T-Bolzens verbessert in die Kanten 10 im oberen und unteren Bereich des Bolzenkopfes 2 fließt, so daß die zylindrische Wandung 11 des Bolzenkopfes 2 eine höhere Genauigkeit aufweist. Dadurch erfährt der Bolzenkopf 2 und damit auch der T-Bolzen 1 insgesamt einen konzentrischen, geraden und festen Sitz innerhalb des Bolzenhalters 7, wobei hierdurch gleichzeitig eine verbesserte Stromübertragung auf den Stirnflächenbereich 4 des T-Bolzens zur Durchführung des Schweißvorganges erzielt wird.

## Patentansprüche

1. T-Bolzen (1), mit einem innerhalb eines Bolzenhalters (7) geführten Bolzenkopf (2) und einem Bolzenschaft (3) mit einem Stirnflächenbereich (4) zum Aufschweißen auf einen Träger, dadurch gekennzeichnet, daß der Bolzenkopf (2) eine zylindrische Wandung (11) zur Führung innerhalb des Bolzenhalters (7) aufweist, wobei die Oberseite (5) des Bolzenkopfes (2) zumindest über einen Teilbereich mit Rillen (8, 8') versehen ist.

2. T-Bolzen nach Anspruch 1, dadurch gekennzeichnet, daß die Rillen (8) konzentrisch zur Bolzenlängsachse (0) verlaufen (Fig. 2).

3. T-Bolzen nach Anspruch 1, dadurch gekennzeichnet, daß die Rillen (8') spiralförmig zur Bolzenlängsachse (0) verlaufen (Fig. 3).

4. T-Bolzen nach einem der vorhergehenden Ansprüche, dadurch gekennzeichnet, daß nur der äußere Bereich (A) der Kopfoberseite (5) mit den Rillen (8, 8') versehen ist.

5. T-Bolzen nach Anspruch 4, dadurch gekennzeichnet, daß der äußere Bereich (A) in etwa dem Durchmesser des Bolzenschaftes (3) entspricht.

6. T-Bolzen nach Anspruch 3 oder 4, dadurch gekennzeichnet, daß der an die Rillen (8, 8') anschließende innere Bereich der Kopfoberseite (2) muldenartig (9) ausgebildet ist.

## Revendications

1. Goujon en T (1) comportant une tête (2) guidée à l'intérieur d'un porte-goujons (7) et une tige (3) présentant une région (4) de face d'extrémité destinée à être soudée sur un support, caractérisé en ce que la tête (2) du goujon présente une surface cylindrique (11) permettant le guidage à l'intérieur du porte-goujons (7), la face supérieure (5) de la tête (2) étant munie, au moins sur une région partielle, de rainures (8, 8').

2. Goujon en T selon la revendication 1, caractérisé en ce que les rainures (8) s'étendent concentriquement à l'axe longitudinal (0) du goujon (fig. 2).

3. Goujon en T selon la revendication 1, caractérisé en ce que les rainures (8') s'étendent de façon hélicoidale à l'axe longitudinal (0) du goujon (fig. 3).

4. Goujon en T selon une des revendications précédentes, caractérisé en ce que la région extérieure (A) seulement de la face supérieure (5) de la tête est munie de rainures (8, 8').

5. Goujon en T selon la revendication 4, caractérisé en ce que la région extérieure (A) correspond sensiblement au diamètre de la tige (3) du goujon.

6. Goujon en T selon la revendication 3 ou 4, caractérisé en ce que la région intérieure de la face supérieure (2) de la tête adjacente aux rainures (8, 8') présente une cavité (9).

## Claims

1. T-bolt, comprising a bolt head (2) guided within a bolt holder (7) and a shaft (3) of a bolt having a front face area (4) to be welded to a support, characterized in that said bolt head (2) has a cylindrical wall (11) to be guided within said bolt holder (7), an upper surface (5) of said bolt head (2) being provided with grooves (8, 8') at least in a partial area.

2. T-bolt according to claim 1, characterized in that said grooves (8) extend concentrically relative to the longitudinal axis (0) of said bolt (Fig. 2).

3. T-bolt according to claim 1, characterized in that said grooves (8') extend spirally relative to the longitudinal axis (0) of said bolt (Fig. 3).

4. T-bolt according to any one of claims 1 to 3, characterized in that only the outer area (A) of the upper surface (5) of said bolt is provided with said grooves (8, 8').

5. T-bolt according to claim 4, characterized in that said outer area (A) has approximately the same diameter as the shaft (3) of said bolt.

6. T-bolt according to claims 3 or 4, characterized in that the inner area of the upper surface of said head (2) adjacent to said grooves (8, 8') is trough-shaped (9).

**FIG. 1**

**FIG. 2**

**FIG. 3**